Europäisches Patentamt

(19) European Patent Office

Office européen des brevets

(11) Publication number: **0 255 352 B1**

# EUROPEAN PATENT SPECIFICATION

(45) Date of publication of patent specification: **22.05.91**   (51) Int. Cl.⁵: **B60S 1/40**

(21) Application number: **87306689.8**

(22) Date of filing: **30.07.87**

(54) Pivot joint.

(30) Priority: **01.08.86 GB 8618848**

(43) Date of publication of application:
**03.02.88 Bulletin 88/05**

(45) Publication of the grant of the patent:
**22.05.91 Bulletin 91/21**

(84) Designated Contracting States:
**BE DE ES FR IT**

(56) References cited:
**DE-A- 2 438 309**
**FR-A- 2 195 956**
**FR-A- 2 254 959**
**FR-A- 2 365 717**
**FR-A- 2 450 182**

(73) Proprietor: **TRICO-FOLBERTH LIMITED**
**Great West Road**
**Brentford Middlesex TW8 9HP(GB)**

(72) Inventor: **Frimley, Charles Henry**
**25, Redford Road**
**Windsor Berkshire(GB)**

(74) Representative: **Pedder, James Cuthbert**
**J.C. Pedder & Co. 38 Norbury Cross**
**Norbury London SW16 4JQ(GB)**

## Description

This invention relates to a pivot joint for use in connecting hook terminations of windscreen wiper arms to wiper blades.

In the manufacture of windscreen wipers, a number of pivot joints are used, particularly between the arm and blade and between the various yokes and/or levers of the blade itself.

Problems exist in the manufacture of windscreen wipers due to the necessity, very often, of pivoting metal parts together. These tend to be noisy and have a tendency to suffer from wear and corrosion. Various proposals have been made for overcoming these problems, for example, by the provision of plastics members between the metal of the joints, but these have not proved entirely satisfactory from a manufacturing standpoint although they have worked satisfactorily in practice.

A proposal which has been found to be satisfactory in practice was described in our prior European Published Patent Application No. EP-A-0 231 129 which fails within the terms of Article 54(3) and (4) EPC. According to this prior Application, a pivot joint comprised a joint body including first attachment means for attaching the joint body to one of the members to be pivoted, second attachment means for attaching the joint body with pivotal play to the other of the members to be pivoted, the second attachment means being provided with spring engagement means whereby the joint body can be assembled on the said other member.

In a particular application of that invention, the pivot joint was applied to the joint connecting the arm of a windscreen wiper with the wiper blade. Various proposals for attaching the arm to the pivot joint were made using special arm terminations for this purpose. However, it was felt that it was desirable to be able to use the invention with a common arm termination known as a "hook" termination. Figure 9 of the said prior Patent Application EP-A-0231129 (Corresponding to GB-A-2186021) showed this proposal. The joint body was provided with a recess to receive the hook, this recess being defined at one end by an "L" shaped resilient tongue which had a projection shaped to the curvature of the hook. The end of the hook was seated in a groove provided in the interior of the end of the joint body which was inclined to assist insertion of the hook. To insert the hook into the joint body , the curved portion of the hook was pressed against the resilient tongue which flexed away from it and enabled the end of the hook to be pushed down the inclined surface and into the groove. The arm was detachable by flexing of the "L" shaped resilient tongue to enable the end of the hook to be extracted from the groove. While this pivot joint is, in theory, entirely satisfactory, problems were envisaged in manufacturing it to tolerances such as to avoid accidental detachment while still allowing detachment when required.

The present invention seeks to provide a simple pivot joint which is relatively inexpensive to manufacture and use and which enables a hook termination of a windscreen wiper arm to be pivoted to a wiper blade.

According to the invention, a pivot joint comprises a joint body including first attachment means for attaching the joint body to a hook termination of a windscreen wiper arm, second attachment means for attaching a portion of the joint body with pivotal play in an aperture in a windscreen wiper blade, the first attachment means comprising a recess into which the hook termination is insertable and holding means engageable behind the curved part of the hook termination when it has been inserted so as to prevent accidental withdrawal of the hook termination and the second attachment means is provided with spring engagement means movable between a first stable position in which it renders a dimension of the said portion of the joint body too large to pass through the aperture in the windscreen wiper blade so as to retain the joint body on the windscreen wiper blade and a second unstable position in which it allows the said portion of the joint body to pass through the aperture in the windscreen wiper blade so that the joint body can be assembled on or disassembled from the windscreen wiper blade.

In a first form of the invention, the holding means comprises one or more resilient projections, integral with or mounted on the joint body, the projection extending into the recess at a position just behind the curved part of the hook when this is inserted into the recess.

In a second form of the invention, the holding means comprises a pin or spigot which passes through the joint body from one side to the other, the pin or spigot passing across the recess at a position just behind the curved part of the hook when this is inserted into the recess.

The aperture in the windscreen wiper blade may be located in the main yoke thereof, the aperture having parallel sides and the projection or pin or spigot on the joint body may be positioned such that it is prevented from leaving the recess in the joint body by the parallel sides of the yoke under normal operating conditions.

The invention will now be described in greater detail, by way of example, with reference to the drawings, in which:-

Figure 1 is a perspective view from above of the joint body of a pivot joint in accordance with a first embodiment of the invention;

Figure 2 is a perspective view from below of the joint body of figure 1;

Figure 3 is a longitudinal sectional view of the joint body of figures 1 and 2 together with the hook end termination of a wiper arm showing the connection of the joint body and arm together;

Figure 4 is a longitudinal sectional view of part of an arm and part of the main blade yoke of a windscreen wiper pivoted together by means of the joint body shown in figures 1 and 2;

Figure 5 is a perspective view from above of the joint body of a pivot joint in accordance with a second embodiment of the invention;

Figure 6 is a longitudinal sectional view of part of an arm and part of the main blade yoke of a windscreen wiper pivoted together by means of the joint body shown in figure 5;

Figure 7 is a perspective view from above of the joint body member of a pivot joint in accordance with a third embodiment of the invention;

Figure 8 is a longitudinal sectional view of part of an arm and part of the main blade yoke of a windscreen wiper pivoted together by means of the joint body shown in figure 7;

In the various embodiments, like parts have been given the same reference numerals.

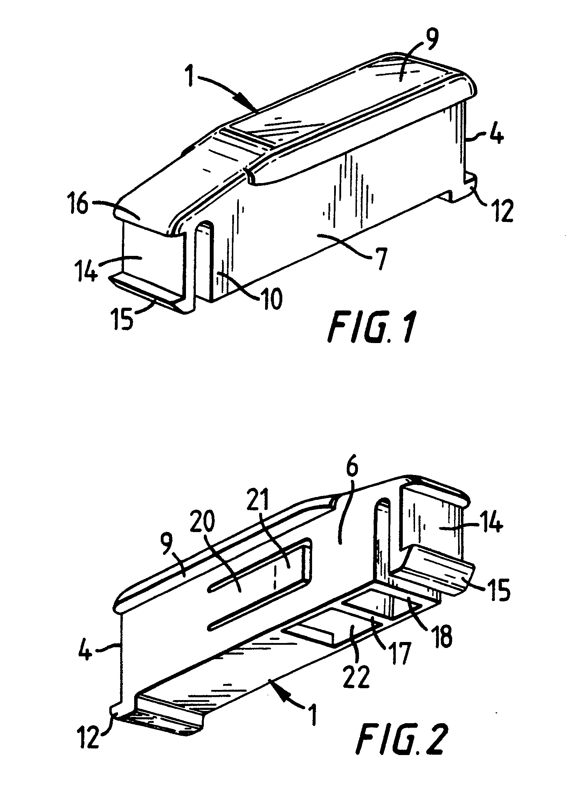

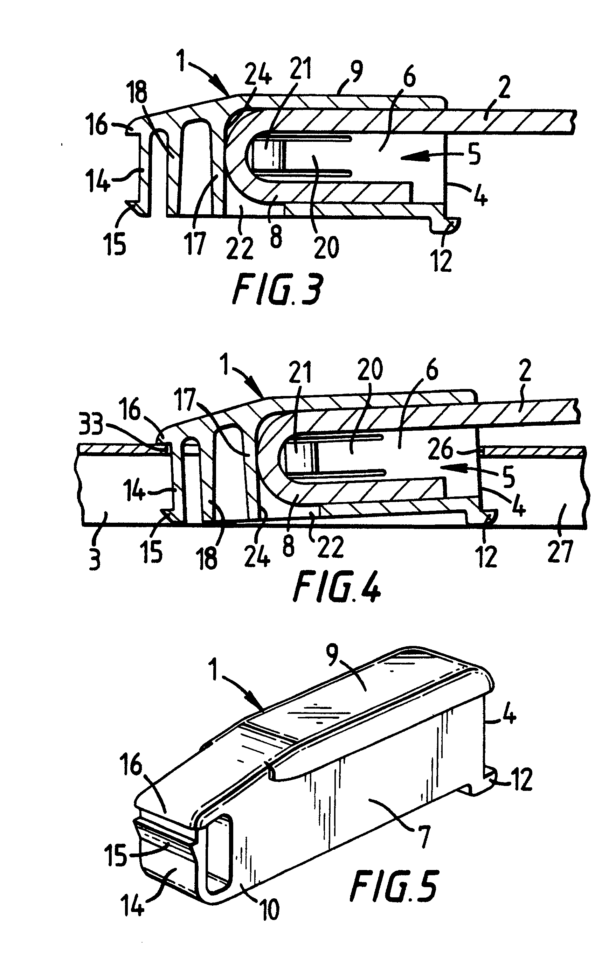

Figures 1 and 2 are perspective views of a joint body 1 used to provide a first embodiment of a pivot joint between a hook arm termination of a wiper arm and a wiper blade, parts of which are shown at 2 and 3 respectively in figure 3. The joint body 1 is a plastics moulding which is hollowed out from one end 4, to provide a recess 5 (figure 3) with side walls 6 and 7 for receiving the hook end termination 8 of the arm 2 of the wiper (figure 3). Below the mouth of the recess 5 is a projection 12 extending longitudinally thereof. The upper part 9 of the joint body 1 is wider than the lower part 10 for a purpose to be described.

The left hand end of the joint body 1 is provided with a resilient tongue 14 which extends downwardly from the top of the joint body 1 and is provided with a detent 15. The free end of the tongue 14 is located beneath a rearwardly extending extension 16 of the top 9 of the joint body 1 with which it is aligned. Adjacent to the tongue 14, there are two depending webs 17 and 18, the first of which, 17, forms the rear wall of the recess 5 while the second, 18, is provided for strengthening purposes and for providing a stop for the resilient tongue 14 to prevent overstressing thereof.

The side wall 6 of the recess 5 is provided with an integral tongue 20, carrying at its free end, a detent 21. This detent 21 projects, in normal circumstances, into the recess 5 for a purpose to be described. Additionally an aperture 22 is provided for moulding purposes.

Referring now particularly to figure 3, a sectional view of the joint body 1 is shown with the hook end 8 of the arm 2 located in the recess 5.

When the hook end 8 is *in situ* in the recess 5, the detent 21 of the tongue 20 engages behind the curved part of the hook end 8 to as to retain the hook end in the recess 5.

In a first method of assembly, the joint body 1 is first secured to the arm 2. To this end, the hook termination 8 of the arm 2 is pushed into the recess 5, past the detent 21, until it comes to lie against the end wall 24 of the recess 5. The detent 21 may be inclined in the direction of the mouth of the recess 5 so that a hook end 8, pushed into the recess 5, can automatically flex the detent 21 out of the way. If desired, the detent 21 may be inclined in both directions so that removal of the arm 2 from the recess 5 can be achieved purely by pulling on the arm. The arm 2 and joint body 1 are now ready for assembly with the wiper blade 3.

To assemble the blade 3 to the arm 2, the left hand end of the joint body 1 is inserted into an aperture 26 formed in the main or primary yoke 27 of the blade 3 (figure 4). It is to be understood that this aperture 26 may be the aperture often provided in the primary yoke for arm attachment, the only significant difference in the present case is that the pivot pin and associated bores, normally used in the attachment, are missing.

The end edge 3 of the aperture 26 is pushed against the tongue 14 to flex it to the right, thereby reducing the length taken up by the joint body 1 and thus enabling the right hand end 4 of the joint body 1 to be inserted into the aperture 26 in its turn. The blade 3 is then released, allowing the tongue 14 to spring out again and provide locking of the joint body 1 in the blade 3 between the detent 15 and the extension 16.

If it is desired to supply a blade for assembly to an existing arm, then it is often desirable to supply the blade with the joint body 1 already assembled thereto. The present embodiment lends itself to this possibility. In this case, left hand end of the joint body 1 is inserted into the aperture 26 formed in the primary yoke 27 of the blade 3 (figure 4). The joint body 1 is pushed with its tongue 14 against the end edge 33 of the aperture 26 so that the tongue 14 is flexed to the right, thereby reducing the length taken up by the joint body 1 and thus enabling the right hand end 4 of the joint body 1 to be inserted into the aperture 26 in its turn. The joint body 3 is then released, allowing the tongue 14 to spring out again and provide locking of the joint body 1 in the blade 3 between the detent 15 and the extension 16.

Then the blade can be assembled to the arm 2. The joint body is raised to its maximum extent out of the aperture 26 in the main yoke, enabling the hook termination 8 of the arm 2 to be pushed into the recess 5, past the detent 21, until it comes to lie against the end wall 24 of the recess 5.

It will be seen that the arm 2 can pivot substantially about the vicinity of the left hand end of the joint body 1, the pivotal movement being limited in a first direction by engagement of the exterior of the primary yoke 27 by the arm 2 and in a second direction by engagement of the upper surface of the projection 12 on the underside of the base of the channel of the yoke 27. Movement is further permitted between the detent 15 and the extension 16. It will of course be understood that when the arm and blades are connected, the arm remains securely restrained within the recess 5 since outward movement of the detent 21 is prevented by the side walls around the aperture 26 over the normal range of operation of the windscreen wiper.

To remove the blade 3 from the arm 2, all that is required is to raise the left hand end of the joint body so that the detent 15 is adjacent the edge of the aperture 26 and then to push the blade longitudinally towards the arm 2. This moves the resilient tongue 14 to the right and allows the right hand end 4 of the joint body 1 to be removed from the aperture 26 in the yoke 27. Once the end 4 has cleared the aperture 26, the left hand end of the joint body 1 can readily be removed therefrom.

The detent 21 is now released and can be flexed out of the recess 5 and it is a simple matter to withdraw the hook end 8 from the recess 5. In order to assist in the flexing of the tongue 20, an aperture (not shown) may be provided in the wall 7 of the recess 5 for the insertion of a spike to enable the projection 21 to be pushed outwardly.

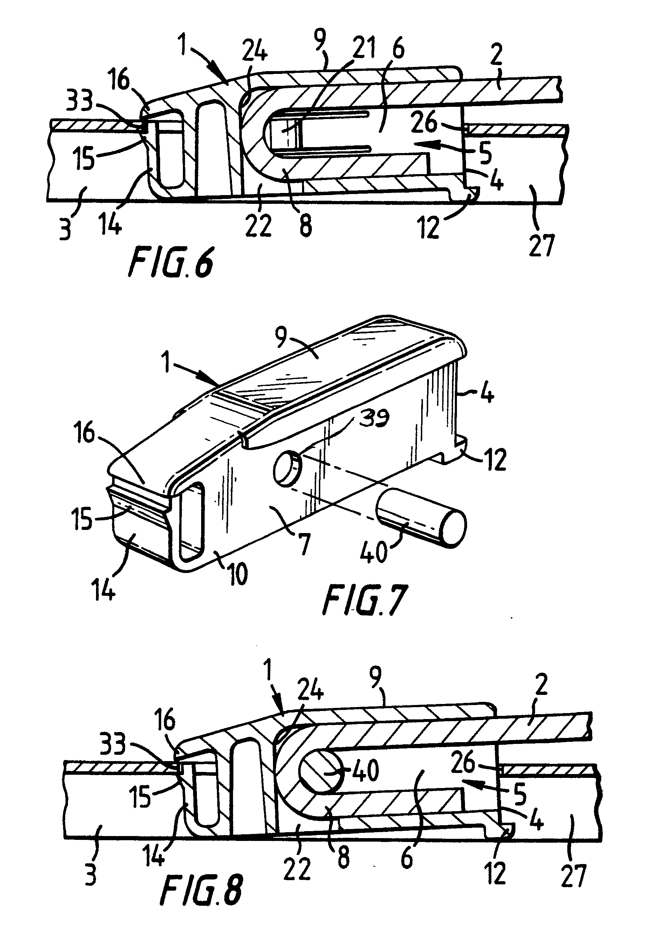

The second embodiment of the invention is illustrated in figures 5 and 6. Figure 5 is a perspective view of a joint body 1 in accordance with this second embodiment of the invention. Unlike the first embodiment, the resilient tongue 14 extends upwards from the bottom of the joint body 1 and the free end of the tongue 14 is located directly beneath the rearwardly extending extension 16 of the top 9 of the joint body 1. This reduces the movement available at the left hand end of the joint body 1 and firmly locates the pivot between arm and blade at this end. Figure 6 shows, in longitudinal section, the joint body 1 assembled in the main yoke 3 of a windscreen wiper blade with the hook termination 8 located in the joint body 1.

The third embodiment of the invention is illustrated in figures 7 and 8. The main difference between this embodiment and the second embodiment lies in the replacement of the integral tongue 20 and detent 21 by a pin or spigot 40. To this end, the side walls 6 and 7 of the recess 5 are apertured by aligned bores 39 through which the pin or spigot 40 can pass so as to extend right across the recess 5. The provision of the pin or spigot 40 allows easier insertion of the hookend 8 into the recess 5.

Figure 8 shows a sectional view of the completed assembly or blade and arm with the hook termination 8 of the arm 2 located in the recess 5 in the joint body 1 and the pin or spigot 40 positioned in the bores 39, retaining the hook termination 8 and joint body 1 together. It will be apparent that the pin or spigot 40 is trapped between the side walls of the yoke 27 surrounding the aperture 26 and thus cannot be removed while the arm and blade remain connected together.

It will be appreciated that various modifications may be made to the above described embodiments without departing from the scope of the invention. For example, while only one detent 21 would usually be provided to avoid moulding difficulties, more than one detent may be provided. Instead of the detent and tongue being formed integrally with the joint body, they could be mounted thereon. In this way, a metal detent could, if desired, be used with a plastics joint body. The shape of the detent could differ from the square shape shown. It could be circular or polygonal, for example. Where the detent is provided with inclined surfaces, these could be formed by making the detent of a part cylindrical shape.

The pin or spigot in the third embodiment could be of any desired cross section, eg. square or polygonal. Furthermore, a pin or spigot could also replace the projection 21 in the first embodiment if desired. However, in this case, the pin would require to be secured in position as, with the first embodiment, the joint body 1 can be lifted sufficiently far out of the main yoke 3 that it could be accidentally removed or allowed to drop out.

## Claims

1. A pivot joint comprising a joint body (1) including first attachment means (5,20,21,40) for attaching the body (1) to a hook termination (8) of a windscreen wiper arm (2), second attachment means (14,15,16) for attaching a portion of the joint body (1) with pivotal play in an aperture (26) in a windscreen wiper blade (3), the first attachment means (5, 20, 21,40) comprising a recess (5) into which the hook termination (8) is insertable and holding means (20,21,40) engageable behind the curved part of the hook termination (8) when it has been inserted so as to prevent accidental withdrawal of the hook termination (8) and the second attachment means (14,15,16) is provided with spring engagement means (14,15) movable between a first stable position in which it renders a dimension of the said portion of the joint body (1) too large to pass through the aperture 26 in the windscreen wiper blade (3) so as to retain the joint body (1) on the windscreen wiper blade (3) and a second unstable position in which it allows the said portion of the joint body (1) to pass through the aperture (26) in the windscreen wiper blade (3) so that the joint body (1) can be assembled on or disassembled from the windscreen wiper blade (3).

2. A pivot joint as claimed in claim 1, characterised in that the holding means comprises one or more resilient projections (21), integral with or mounted on the joint body (1), the projection(s) (21) extending into the recess (5) at a position just behind the curved part of the hook termination (8) when this is inserted into the recess (5).

3. A pivot joint as claimed in claim 1, characterised in that the holding means comprises a pin or spigot (40) which passes through the body (1) from one side to the other, the pin or spigot (40) passing across the recess (5) at a position just behind the curved part of the hook termination (8) when this is inserted into the recess (5).

4. A pivot joint as claimed in claim 2 or 3, characterised in that the aperture (26) in the windscreen wiper blade (3) is located in the main yoke (27) thereof, the aperture (26) having parallel sides and the projection or pin or spigot (40) on the joint body (1) is positioned such that it is prevented from leaving the recess (5) in the joint body (1) by the parallel sides of the yoke (27) under normal operating conditions.

5. A pivot joint as claimed in any one of claims 1 to 4, characterised in that the spring engagement means comprises a resilient tongue (14) at one end of the joint body (1) which in its first stable position has its free end is spaced longitudinally from the joint body (1) and in its second unstable position has its free end approaching the joint body (1), thereby reducing the effective length of the joint body (1) in comparison with the first position.

6. A pivot joint as claimed in claim 5, characterised in that the resilient tongue (14) is attached to the joint body (1) at an upper part thereof and extends downwardly therefrom.

7. A pivot joint as claimed in claim 5, characterised in that the resilient tongue (14) is attached to the joint body (1) at a lower part thereof and extends upwardly therefrom.

8. A pivot joint as claimed in any one of claims 5 to 7, characterised in that the free end of the resilient tongue (14) is provided with a detent (15) extending longitudinally of the joint body (1).

9. A pivot joint as claimed in claim 8, characterised in that the joint body (1) has a longitudinal extension (16) of its upper surface extending parallel to the detent (15) such that a part of the blade is located between the extension (16) and the detent (15).

10. A windscreen wiper having a pivot joint for pivotal connection of the windscreen wiper arm to the windscreen wiper blade as claimed in any one of claims 1 to 9.

**Revendications**

1. Joint d'articulation constitué par un corps (1) comprenant des premiers moyens de fixation (5, 20, 21, 40) destinés à fixer le corps (1) sur une terminaison en crochet (8) d'un bras d'essuie-glace (2), des seconds moyens de fixation (14, 15, 16) destinés à fixer une portion du corps (1) avec un jeu pivotant dans une ouverture (26) d'une lame ou raclette d'essuie-glace (3), les premiers moyens de fixation (5, 20, 21, 40) comportant un évidement (5) dans lequel peut être introduit la terminaison en crochet (8) et des moyens de retenue (20, 21, 40) pouvant s'engager derrière la partie courbée de la terminaison en crochet (8) lorsqu'elle a été introduite de façon à empêcher l'extraction accidentelle de la terminaison en crochet (8) et des seconds moyens de fixation (14, 15, 16) munis de moyens d'engagement à ressort (14, 15) mobiles entre une première position stable, dans laquelle une dimension de la portion du corps (1) est rendue trop grande pour traverser l'ouverture (26) dans la lame d'essuie-glace (3) de façon à retenir le corps (1) sur la lame d'essuie-glace (3) et une seconde position non stable dans laquelle la portion du corps (1) peut traverser l'ouverture (26) dans la lame d'essuie-glace (3) de façon à permettre le montage ou le démontage du corps (1) par rapport à la lame d'essuie-glace (3).

2. Joint d'articulation selon la revendication 1, caractérisé en ce que les moyens de retenue comprennent une ou plusieurs saillies élastiques (21) solidaires ou montées sur le corps (1), la (les) saillie(s) (21) s'étendant jusque dans l'évidement (5) en une position située juste derrière la partie courbée de la terminaison en crochet (8) lorsque celle-ci est introduite dans l'évidement (5).

3. Joint d'articulation selon la revendication 1, caractérisé en ce que les moyens de retenue comprennent un axe (40) qui traverse le corps (1) d'un côté à l'autre, l'axe (40) traversant l'évidement (5) en une position située juste derrière la partie courbée de la terminaison en crochet (8) lorsque celle-ci est introduite dans l'évidement (5).

4. Joint articulé selon la revendication 2 ou 3, caractérisé en ce que l'ouverture (26) dans la lame d'essuie-glace (3) est située dans l'étrier principal (27) de celui-ci, l'ouverture (26) comportant des côtés parallèles et la saillie ou axe (40) sur le corps (1) est positionné de façon à se trouver dans l'impossibilité de quitter l'évidement (5) dans le corps (1) par les côtés parallèles de l'étrier (27) dans des conditions normales de fonctionnement.

5. Joint d'articulation selon l'une quelconque des revendications 1 à 4, caractérisé en ce que les moyens d'engagement à ressort sont constitués par une languette élastique (14) sur une extrémité du corps (1) dont l'extrémité libre dans sa première position stable espacée longitudinalement du corps (1) et dont l'extrémité est libre dans sa seconde position non stable se rapproche du corps (1), ce qui permet de réduire la longueur effective du corps (1) par rapport à la première position.

6. Joint d'articulation selon la revendication 5, caractérisé en ce que la languette élastique (14) est fixée sur le corps (1) en une partie supérieure de celui-ci et s'étend vers le bas.

7. Joint d'articulation selon la revendication 5, caractérisé en ce que la languette élastique (14) est fixée sur le corps (1) en une partie inférieure de celui-ci et s'étend vers le haut.

8. Joint d'articulation selon l'une quelconque des revendications 5 à 7, caractérisé en ce que l'extrémité libre de la languette élastique (14) est munie d'une butée à déclic (15) s'étendant longitudinalement par rapport au corps (1).

9. Joint d'articulation selon la revendication 8, caractérisé en ce que le corps (1) présente une extension longitudinale (16) de sa surface supérieure s'étendant parallèlement à la butée à déclic (15) de sorte qu'une partie de la raclette ou lame d'essuieglace est située entre l'extension (16) et la butée à déclic (15).

10. Balai d'essuie-glace comportant un joint d'articulation pour la liaison en pivotement du bras d'essuie-glace sur la raclette ou lame d'essuie-glace selon l'une quelconque des revendications 1 à 9.

**Ansprüche**

1. Drehverbindung, die einen Verbindungskörper (1) umfaßt, der eine erste Befestigungseinrichtung (5, 20, 21, 40) zur Befestigung des Körpers (1) an ein Hakenende (8) des Scheibenwischerarmes (2), eine zweite Befestigungseinrichtung (14, 15, 16) umfaßt, um einen Teil des Verbindungskörpers (1) mit einer Drehmöglichkeit in der Öffnung (26) im Scheibenwischerblatt (3) zu befestigen, wobei die erste Befestigungseinrichtung (5, 20, 21, 40) eine Vertiefung (5), in die das Hakenende (8) eingesetzt werden kann, und eine Halteeinrichtung (20, 21, 40) umfaßt, die hinter dem gebogenen Teil des Hakenendes (8) eingreifen kann, wenn sie eingesetzt wurde, um das zufällige Abziehen des Hakenendes (8) zu verhindern, und die zweite Befestigungseinrichtung (14, 15, 16) mit einer Federeinrast-Einrichtung (14, 15) versehen ist, die zwischen einer ersten stabilen Position, in der sie die Abmessung des Teils des Verbindungskörpers (1) zu sehr vergrößert, um durch die Öffnung (26) im Scheibenwischerblatt (3) hindurchzugehen, so daß der Verbindungskörper (1) auf dem Scheibenwischerblatt (3) bleibt, und einer zweiten instabilen Position beweglich ist, in der dieser Teil des Verbindungskörpers (1) durch die Öffnung (26) im Scheibenwischerblatt (3) hindurchgehen kann, so daß der Verbindungskörper (1) auf das Scheibenwischerblatt (3) aufgebaut oder von diesem abgebaut werden kann.

2. Drehverbindung nach Anspruch 1, dadurch gekennzeichnet, daß die Halteeinrichtung ein oder mehrere elastische Vorsprünge (21) aufweist, die einstückig mit dem Verbindungskörper (1) ausgebildet oder darauf befestigt sind, wobei sich der Vorsprung (die Vorsprünge) (21) an einer Stelle genau hinter dem gebogenen Teil des Hakenendes (8) in die Vertiefung (5) erstreckt, wenn er in diese Vertiefung (5) eingesetzt wird.

3. Drehverbindung nach Anspruch 1, dadurch gekennzeichnet, daß die Halteeinrichtung einen Stift oder Zapfen (40) umfaßt, der von einer Seite zur anderen durch den Körper (1) hindurchgeht, wobei dieser Stift oder zapfen (40) an einer Stelle genau hinter dem gebogenen Teil des Hakenendes (8) entlang der Vertiefung (5) verläuft, wenn er in diese Vertiefung (5) eingesetzt ist.

4. Drehverbindung nach Anspruch 2 oder 3, dadurch gekennzeichnet, daß die Öffnung (26) im Scheibenwischerblatt (3) in seinem Hauptarm (27) angeordnet ist, wobei diese Öffnung (26) parallele Seiten aufweist, und der Vorsprung oder der Stift oder der Zapfen (40) auf dem Verbindungskörper (1) so angeordnet Ist, daß er bei normalen Betriebsbedingungen durch die parallelen Seiten des Arms (27) am Verlassen der Vertiefung (5) im Verbindungskörper (1) gehindert wird.

5. Drehverbindung nach einem der Ansprüche 1 bis 4, dadurch gekennzeichnet, daß die Federeinrast-Einrichtung eine elastische Führungsfeder (14) an einem Ende des Verbindungskörpers (1) umfaßt, bei der in der ersten stabilen Position das freie Ende längs vom Verbindungskörper (1) räumlich getrennt ist und in der zweiten instabilen Position sich ihr freies Ende dem Verbindungskörper (1) nähert, wodruch sich die wirksame Länge des Verbindungskörpers (1) im Vergleich zur ersten Position verringert.

6. Drehverbindung nach Anspruch 5, dadurch gekennzeichnet, daß die elastische Führungsfeder (14) am oberen Teil des Verbindungskörpers (1) angebracht ist und sich davon nach unten erstreckt.

7. Drehverbindung nach Anspruch 5, dadurch gekennzeichnet, daß die elastische Führungsfeder (14) im unteren Teil an den Verbindungskörper (1) angebracht ist und sich davon nach oben erstreckt.

8. Drehverbindung nach einem der Ansprüche 5 bis 7, dadurch gekennzeichent, daß das freie Ende der elastischen Führungsfeder (14) mit einer einrückbaren Arretierung (15) versehen ist, die sich längs des Verbindungskörpers (1) erstreckt.

9. Drehverbindung nach Anspruch 8, dadurch gekennnzeichnet, daß der Verbindungskörper (1) eine Längsausdehnung (16) seiner oberen Oberfläche aufweist, die sich parallel zur einrückbaren Arretierung (15) erstreckt, so daß ein Teil des Blattes zwischen der Ausdehnung (16) und der einrückbaren Arretierung (15) angeordnet ist.

10. Scheibenwischer mit einer Drehverbindung zur drehbaren Verbindung des Scheibenwischerarmes an das Scheibenwischerblatt nach einem der Ansprüche 1 bis 9.

*FIG.1*

*FIG.2*

FIG.3

FIG.4

FIG.5

**FIG.6**

**FIG.7**

**FIG.8**